# FASCICULE DE BREVET EUROPEEN

(11) **EP 2 901 624 B1**
(45) Date de publication et mention de la délivrance du brevet: **20.07.2016**
(21) Numéro de dépôt: 13779262.8
(22) Date de dépôt: 18.09.2013
(51) Int. Cl.: H04L 12/28

(54) **AJUSTEMENT DE BANDE PASSANTE D'UN FLUX DE DONNEES AU SEIN D'UN CANAL VIRTUEL XDSL MUTUALISE**
EINSTELLUNG DER BANDBREITE EINES DATENSTROMES IN EINEM GEMEINSAMEN VIRTUELLEN XDSL-KANAL
ADJUSTMENT OF THE BANDWIDTH OF A DATA STREAM IN A SHARED XDSL VIRTUAL CHANNEL

(30) Priorité: 27.09.2012 FR 1259133
(43) Date de publication de la demande: 05.08.2015
(73) Titulaire: Orange, 75015 Paris (FR)
(72) Inventeur: MEURISSE, Florence, F-22700 Louannec (FR); LEMOINE, Benoît, F-22300 Ploubezre (FR)
(86) Numéro de dépôt international: PCT/FR2013/052148
(87) Numéro de publication internationale: WO 2014/049229

(56) Documents cités:
- WO-A1-2007/012867
- US-A1- 2005 015 494

## Description

La présente invention concerne les réseaux xDSL utilisant la technologie ATM. Plus particulièrement, la présente invention concerne un procédé et un dispositif pour ajuster la bande passante d'un flux de données au sein d'un canal virtuel mutualisant plusieurs flux de données associés à différents services.

On rappelle (cf. par exemple le site Internet http://.fr.wikipedia.org/wiki/Asynchronous Transfer Mode) que la technologie ATM (initiales des mots anglais *« Asynchronous Transfer Mode »* signifiant « Mode de Transfert Asynchrone ») est un protocole réseau à commutation de trames (appelées « cellules »), qui permet de multiplexer sur un même lien différents flots de données par répartition dans le temps (« *Time Division Multiplexing* », ou TDM en anglais), en offrant plusieurs niveaux de Qualité de Service (« *Quality of Service* », ou QoS en anglais).

La technologie ATM a été conçue pour fournir un standard réseau unifié qui pourrait transporter aussi bien un trafic de données synchrone qu'un trafic utilisant des paquets (par exemple, de type IP). Plus précisément, l'ATM est un protocole asynchrone, s'appuyant habituellement sur une couche de transport synchrone : en effet, les cellules ATM sont envoyées de manière asynchrone, en fonction des données à transmettre, mais sont insérées dans le flux de données synchrones d'un protocole de niveau inférieur pour leur transport.

Les cellules ATM sont des segments de données de taille fixe de 53 octets (48 octets de charge utile et 5 octets d'en-tête), à la différence des paquets de longueur variable utilisés par exemple dans les protocoles de type IP (« Internet Protocol ») ou Ethernet. La commutation des cellules allie la simplicité de la commutation de circuits à la flexibilité de la commutation de paquets. Pour chaque communication, un circuit virtuel (« *virtual circuit* », ou VC en anglais) est établi soit par configuration des équipements, soit par signalisation, et les cellules successives sont commutées sur ce circuit virtuel par commutation de labels. En particulier, le chemin utilisé dans le réseau par ces cellules ne varie pas au cours de la communication puisqu'il est déterminé lors de l'établissement du circuit virtuel.

L'ATM est une technologie assez complexe, mais dont les fonctionnalités s'appliquent aussi bien aux grands réseaux de télécommunications qu'aux Réseaux Locaux (« *Local Area Networks* », ou LAN en anglais) de dimensions plus réduites. L'ATM est utile et largement déployé comme couche de multiplexage dans les réseaux xDSL, où ses compromis correspondent bien aux besoins de ces réseaux.

On rappelle également (cf. par exemple l'article correspondant sur le site Internet www.kitz.co.uk, ou l'étude présentée par Jean Parrend à la société France Télécom en juin 2004) que l'ADSL (initiales des mots anglais « *Asymmetrical Digital Subscriber Line* » signifiant « Ligne d'Abonné Numérique Asymétrique ») est une technologie utilisant les lignes téléphoniques classiques du Réseau Téléphonique Commuté (RTC) (« *Public Switched Telephone Network*, ou PSTN, en anglais) pour véhiculer des données à haut débit. La technologie ADSL a été initialement définie dans la norme G.992.1 de l'Union Internationale des Télécommunications (*International Telecommunication Union* ou ITU en anglais), ainsi que dans la norme T1.413 de l'ANSI (*American National Standards Institute*). Elle a été étendue à un ensemble de technologies collectivement appelées « xDSL » (telles que ADSL, ADSL2, ADSL2+, SDSL, VDSL et VDSL2), qui sont toutes visées par la présente invention.

La technologie ADSL tire parti des bandes de fréquences non utilisées par le RTC. Ainsi, alors que la voix est transportée sur une bande de fréquences allant de 300 à 3400 Hz, le signal ADSL est transmis sur des plages de fréquences hautes (inaudibles) allant de 26 kHz à 2 MHz environ. L'utilisation de cette bande très large permet de transporter des données à des débits pouvant atteindre au maximum 8 Mbit/s en réception, et 768 kbit/s en émission ; on notera à cet égard que les communications sur Internet sont généralement très asymétriques : par exemple, un utilisateur grand public connecté à l'Internet a besoin d'un débit assez considérable en réception, tandis qu'en émission, un débit faible lui suffit généralement. La technologie ADSL est adaptée à ces besoins, puisqu'elle offre un débit à la fois élevé et asymétrique.

Point intéressant pour l'utilisateur, comme les signaux vocaux et ADSL utilisent des plages de fréquences différentes, la même ligne téléphonique permet, simultanément, de téléphoner et de « surfer » sur Internet avec un débit élevé. Un filtre sépare dans la résidence de l'utilisateur, parmi les signaux reçus, ceux qui correspondent aux communications téléphoniques des signaux de hautes fréquences.

La conversion de données numériques en signaux analogiques dans l'ADSL utilise un multiplexage par division en fréquence (« *Frequency Division Multiplexing* », ou FDM en anglais). Il existe différentes méthodes de modulation, mais la norme la plus utilisée est appelée DMT (initiales des mots anglais « *Discrete Multi Tone* » signifiant « Multi-Tonalités Discrètes ») et est définie dans la norme G.992.1 précitée. Selon la norme DMT, la gamme de fréquences disponibles est divisée en un nombre prédéterminé (256 ou 512) de sous-canaux (également appelés « tonalités »). DMT met en oeuvre un grand nombre de « modems virtuels », qui sont responsables du contrôle de chaque sous-canal ; ces modems virtuels collaborent pour transporter les données numériques à des vitesses élevées.

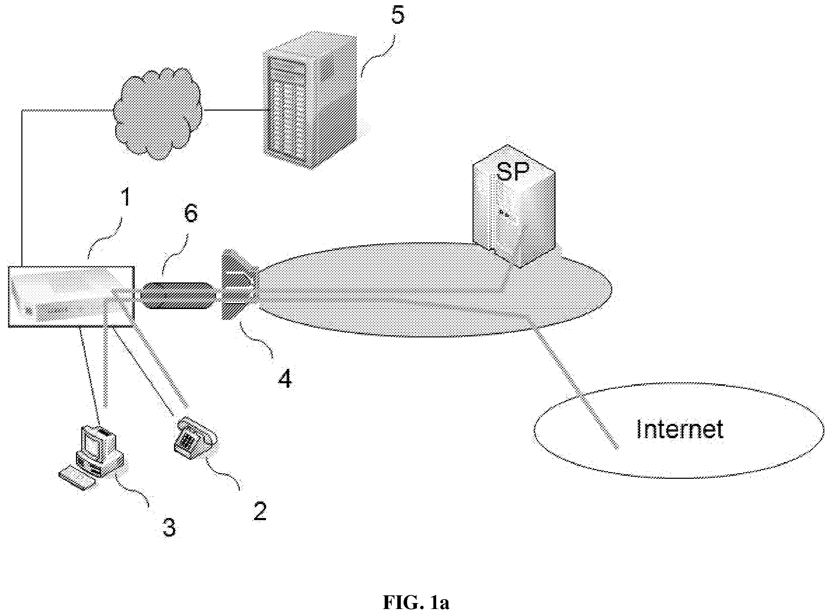

On va décrire à présent brièvement, en référence à la **figure 1a**, les éléments principaux d'un réseau ADSL classique.

Un modem (modulateur/démodulateur) effectue la conversion numérique-vers-analogique mentionnée ci-dessus, et inversement, des données de la ligne ADSL. Ce modem est souvent intégré dans une passerelle résidentielle 1, qui gère un réseau local de dispositifs appartenant à un abonné au sein d'une résidence domestique, ou d'une entreprise. On a représenté ici, à titre d'exemple, un poste téléphonique analogique 2 et un ordinateur personnel 3 connectés à la passerelle 1 ; les signaux vocaux émis par ce téléphone 2 sont transformés en signaux de VoIP (Voix sur IP) par la passerelle 1.

Un équipement de coeur de réseau appelé « serveur de configuration » 5 permet à l'opérateur ADSL de configurer la passerelle 1, c'est-à-dire de régler des paramètres de fonctionnement du réseau local et de la ligne ADSL.

La passerelle 1 est connectée à un DSLAM (initiales des mots anglais *« Digital Subscriber Line Access Multiplexer* » signifiant « Multiplexeur d'Accès de Ligne d'Abonné Numérique ») 4 : il s'agit d'un dispositif situé au central téléphonique et collectant le trafic de données ADSL qui transite sur un certain nombre de lignes téléphoniques. Comme expliqué ci-dessus, les communications entre la passerelle 1 et le DSLAM 4 sont contenues dans un ou plusieurs canaux virtuels (VC) 6. On appelle « synchronisation » la phase d'établissement du lien entre la passerelle 1 et le DSLAM 4, et « débit de synchronisation » le débit de données entre ces deux unités. Le débit de synchronisation est classiquement fixé conformément à un protocole que l'on décrira ci-après (on dit alors que le débit de synchronisation est « négocié » entre la passerelle 1 et le DSLAM 4 »).

Suite à la réception d'un signal provenant de l'abonné, le DSLAM 4 filtre ce signal. La partie « voix analogique » est envoyée par une *carte filtre* vers le RTC, et la partie ADSL vers une *carte modem.* Au niveau de la carte modem, la partie haute du spectre de fréquence est démodulée : on se retrouve à ce stade avec le signal ATM tel qu'il était avant d'être modulé en ADSL côté abonné. Dans le cas particulier où le réseau de collecte au-delà du DSLAM repose sur la technologie ATM, les canaux virtuels ATM restitués par la carte modem du DSLAM 4 sont multiplexés, au moyen d'une *carte réseau,* pour former des chemins d'accès virtuels (« *Virtual Path* », ou VP en anglais) vers l'Internet ou des fournisseurs de services (« Service Providers », ou SP, en anglais).

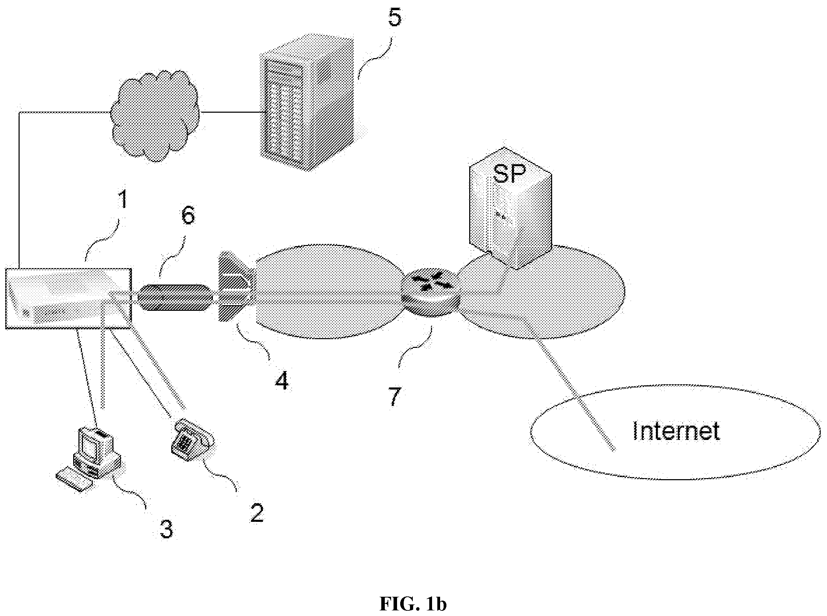

La **figure 1b** représente un cas particulier de réseau ADSL classique.

Ce réseau est analogue à celui de la figure 1a, si ce n'est que chaque VP commencé dans le DSLAM 4 est aiguillé sur le trajet ATM jusqu'à un noeud du réseau appelé « Serveur d'Accès Large Bande » (« *Broadband Access Server* », ou BAS, en anglais) 7, qui effectue le routage IP, l'authentification des abonnés et l'évaluation des volumes de trafic de données. Dans de tels réseaux, le BAS 7 constitue un point de concentration des flux échangés entre l'abonné, et l'Internet ou des plateformes de services ; les VP sont terminés dans le BAS 7, et chacun des VC est traité individuellement pour permettre la connexion à une plateforme de services ; le BAS 7 héberge des « routeurs virtuels », qui dirigent les flux de données issus de l'abonné vers un réseau IP permettant l'accès aux plateformes de services. Le BAS 7 est donc un équipement du réseau ADSL qui fait l'interface entre le réseau de collecte ATM et le réseau d'interconnexion (« *Backbone Network* » en anglais) et de collecte IP ; on notera toutefois que le BAS 7 ne sait pas *a priori* quel débit de synchronisation a été négocié entre la passerelle 1 et le DSLAM 4, notamment dans le cas des offres dites « à débit libéré » dans lesquelles la bande passante offerte au client est la bande passante maximale qui a pu être négociée sur le lien ADSL.

On rappelle enfin que le Wi-Fi est une technologie de communication sans-fil définie par la norme 802.11 de la IEEE (Institute of Electric and Electronics Engineers). De nos jours, les passerelles résidentielles intègrent souvent une station de base Wi-Fi (« *hotspot* » en anglais) (non représentée sur les figures 1a et 1b) pour permettre une communication sans-fil entre la passerelle et un ordinateur portable de l'abonné.

Il a été proposé récemment de faire usage des réseaux xDSL dans le cadre d'un service appelé « Wi-Fi communautaire ». Ce service consiste à proposer aux abonnés xDSL de permettre à d'autres abonnés du même opérateur d'accéder à leur *hotspot* résidentiel. L'abonné xDSL qui accepte de participer à ce système bénéficie en retour d'un service de connectivité Internet gratuit lorsqu'il est en mobilité, *via* la possibilité de se connecter sur le réseau Wi-Fi communautaire créé par l'ensemble des *hotspots* participants. L'impact sur la QoS (initiales des mots anglais « *Quality of Service* » signifiant « Qualité de Service ») de la participation au Wi-Fi communautaire pour cet abonné xDSL doit cependant être minimal ; autrement dit, il s'agit de perturber le moins possible son propre usage de sa ligne xDSL quand des visiteurs se connectent sur son *hotspot.*

On cherche donc, dans le cadre du Wi-Fi communautaire, à transporter au moins deux services sur une même infrastructure, et l'on souhaite garantir que la proportion de la bande passante de la ligne ADSL offerte aux services dits « non-prioritaires » soit bornée, afin de pouvoir garantir une bande passante minimale pour les services dits « prioritaires » (ceux associés au propriétaire du *hotspot*) (dans le cadre du présent document, on utilisera de manière équivalente l'expression « bande passante » et l'expression « débit de données »). Dans ce cas, un mécanisme de gestion de bande passante est nécessaire, notamment au niveau du goulot d'étranglement de l'infrastructure de transport utilisée pour ces services. En effet, dans le cas de services utilisant un réseau xDSL et transportés par une technologie ATM, il existe un goulot d'étranglement dans le sens descendant au niveau du lien entre le DSLAM 4 et la passerelle 1.

La solution couramment déployée pour résoudre ce problème de garantie de bande passante consiste à utiliser des canaux virtuels différents pour chaque service, en définissant des classes de services spécifiques attribuées à chaque VC, telles que CBR (*Constant Bit Rate*), VBR (*Variable Bit Rate*), UBR (*Unspecified Bite Rate*) ou encore ABR (*Available Bit Rate*). Toutefois, pour des raisons techniques, opérationnelles ou réglementaires, il se trouve que l'utilisation d'un VC par service n'est pas toujours possible. Il est donc nécessaire de concevoir une solution pour le cas où deux services au moins sont portés par *le même VC*, et où l'on souhaite garantir, soit que le service dit « non-prioritaire » ne puisse accéder qu'à une proportion bornée de la bande passante totale de la ligne xDSL, soit que la réduction relative (en pourcentage) de bande passante induite par le service non-prioritaire sur le service prioritaire véhiculé par le même VC soit limitée à une valeur maîtrisée par l'opérateur. Or la technologie ATM ne prévoit pas de mécanisme permettant d'identifier un flux par rapport à un autre au sein d'un VC, et encore moins d'appliquer des profils de QoS différents pour chacun de ces flux.

Un exemple de l'art antérieur se trouve dans US2005/015494. Plus généralement, il est souhaitable de pouvoir, au besoin, limiter la bande passante d'un certain flux de données destiné à un DSLAM en fonction de la capacité d'admission de ce DSLAM, afin de ne pas transporter depuis l'amont du réseau xDSL/IP un flux de données qui occupe toute une bande passante du réseau de façon inutile puisqu'il va engendrer une congestion et par la suite subir un écrêtage de trafic non maîtrisé lors de son transit à travers le DSLAM.

La présente invention concerne donc un procédé d'ajustement de bande passante d'un flux de données au sein d'un canal virtuel xDSL, comprenant une étape de réception, par une passerelle d'accès à un réseau xDSL contenu dans un réseau IP, d'une requête d'accès à un service accessible *via* ledit réseau xDSL. Ledit procédé est remarquable en ce qu'il comprend ensuite les étapes suivantes :
- ladite passerelle d'accès obtient la valeur d'un débit de synchronisation entre la passerelle d'accès et le réseau xDSL,
- la passerelle d'accès détermine, en fonction d'un ensemble d'informations prédéterminé comprenant au moins ladite valeur du débit de synchronisation, l'identité d'une interface correspondante parmi une pluralité d'interfaces d'un équipement du réseau IP, dit noeud concentrateur, chacune de ces interfaces portant une fonction de limitation permettant de limiter le débit du trafic, dit trafic descendant, sortant de cette interface en direction de la passerelle, ou l'identité d'un serveur mandataire associé à ladite interface correspondante du noeud concentrateur,
- la passerelle d'accès transmet la requête d'accès vers l'amont du réseau IP, en utilisant comme adresse de destination l'adresse de ladite interface correspondante du noeud concentrateur ou l'adresse dudit serveur mandataire associé à cette interface correspondante du noeud concentrateur, et
- un contexte de routage est créé au niveau du noeud concentrateur lors du passage, dans le sens montant, de la requête d'accès, de sorte que le trafic descendant associé à cette requête d'accès passe par ladite interface correspondante du noeud concentrateur.

Par « interface », on entend ici le lieu de terminaison d'une connexion, vu de ladite passerelle d'accès, par exemple une certaine adresse IP, ou un certain couple adresse IP/VLAN (initiales des mots anglais « *Virtual Local Area Network* » signifiant « Réseau Local Virtuel »).

Ainsi, la présente invention propose de limiter, en fonction d'un débit de synchronisation sur la ligne xDSL associée à une passerelle d'accès (et, optionnellement, en fonction de critères supplémentaires), le débit d'un flux de données issu d'une plateforme de services et destiné à cette passerelle, lors du passage de ce flux de données au travers d'un équipement selon l'invention, appelé « noeud concentrateur », de préférence situé dans le coeur dudit réseau IP.

Ladite valeur du débit de synchronisation pourra, de manière classique, avoir été préalablement négociée entre la passerelle d'accès et le réseau xDSL.

On notera également que la passerelle d'accès visée par l'invention pourra être une passerelle résidentielle utilisée dans le cadre d'un domicile ou d'une entreprise, ou bien un autre type de passerelle donnant accès à un réseau xDSL.

Grâce à ces dispositions, il n'est pas nécessaire de mettre en place dans le réseau un protocole de commande supplémentaire, ou un serveur de contrôle (« *policy server* »). De plus, l'invention est simple à mettre en oeuvre, et ne nécessite pas de disposer de fonctionnalités complexes sur ledit noeud concentrateur.

Selon des caractéristiques particulières, ledit service visé par ladite requête d'accès est un service non-prioritaire par rapport à un service prédéterminé, dit service prioritaire, ledit service prioritaire étant associé à des flux de données passant par le même canal virtuel que ceux du service non-prioritaire, mais ne passant pas par ledit noeud concentrateur.

Grâce à ces dispositions, on peut adapter le débit des flux non-prioritaires en amont du DSLAM de manière à ce que, avantageusement, chacun de ces flux non-prioritaires parvenant au DSLAM ne consomme qu'une proportion bornée de la bande passante disponible sur la ligne xDSL, et que la bande passante disponible pour les flux prioritaires soit, quant à elle, supérieure à un minimum garanti.

Concernant l'application de l'invention au service Wi-Fi communautaire, on peut ainsi véhiculer le service de connectivité Internet d'un visiteur sur le VC Internet de l'abonné prioritaire, tout en garantissant à cet abonné prioritaire que l'activation d'une fonction « *hotspot* public » sur sa passerelle résidentielle ne perturbera pas la bande passante qui lui est réservée de plus d'un certain pourcentage (ledit pourcentage étant à fixer de manière contractuelle entre l'abonné prioritaire et son fournisseur d'accès xDSL). On notera à cet égard que, selon l'état de l'art, un terminal n'envoie une requête d'accès à une passerelle qu'en réponse à un signal d'annonce, dit « *beacon* », émis par la passerelle ; ainsi, en activant, ou non, sur cette passerelle un signal *beacon* correspondant au service Wi-Fi communautaire, on peut contrôler la possibilité pour des abonnés non-prioritaires de présenter une requête d'accès au réseau *via* cette passerelle ; ce contrôle peut par exemple être utile au cas où l'on constate que le débit de synchronisation est tellement faible qu'il ne suffit même pas à accommoder la bande passante cible de l'abonné prioritaire : dans ce cas, on ne voudra évidemment pas permettre à des abonnés non-prioritaires d'utiliser la passerelle, et l'on s'abstiendra donc de diffuser ce signal *beacon.*

Mais on notera que, si le service non-prioritaire peut, comme dans l'exemple du Wi-Fi communautaire, concerner un autre abonné que le service prioritaire, il peut tout aussi bien concerner le même abonné que le service prioritaire en étant, évidemment, affecté d'un degré de priorité inférieur.

Corrélativement, l'invention concerne divers dispositifs.

Elle concerne ainsi, premièrement, une passerelle d'accès à un réseau xDSL contenu dans un réseau IP, comprenant des moyens pour recevoir une requête d'accès à un service accessible *via* ledit réseau xDSL. Ladite passerelle est remarquable en ce qu'elle comprend en outre des moyens pour :
- obtenir la valeur d'un débit de synchronisation entre ladite passerelle d'accès et ledit réseau xDSL,
- déterminer, en fonction d'un ensemble d'informations prédéterminé comprenant au moins ladite valeur du débit de synchronisation, l'identité d'une interface correspondante située dans ledit réseau IP ou l'identité d'un serveur mandataire associé à ladite interface correspondante, et
- transmettre ladite requête d'accès vers l'amont du réseau IP, en utilisant comme adresse de destination l'adresse de ladite interface correspondante ou l'adresse dudit serveur mandataire associé à cette interface correspondante.

La passerelle pourra en outre comprendre des moyens pour négocier avec le réseau xDSL ladite valeur du débit de synchronisation.

Selon des caractéristiques particulières, ladite passerelle d'accès comprend en outre des moyens pour déterminer si ledit service visé par ladite requête d'accès est un service prédéterminé, dit service prioritaire, ou un autre service, dit service non-prioritaire, et pour ne mettre en oeuvre les moyens décrits succinctement ci-dessus que s'il s'agit d'un service non-prioritaire.

L'invention concerne aussi, deuxièmement, un équipement, dit noeud concentrateur, d'un réseau IP, comprenant une pluralité d'interfaces. Ledit noeud concentrateur est remarquable en ce qu'il comprend en outre des moyens pour, lors de la réception par une interface donnée dudit noeud concentrateur d'une requête d'accès à un service émise par un utilisateur d'un réseau xDSL contenu dans ledit réseau IP, router le trafic, dit trafic descendant, destiné à cet utilisateur à travers ladite interface ayant reçu la requête d'accès, et en ce que chacune de ces interfaces porte une fonction de limitation permettant de limiter le débit dudit trafic descendant.

L'invention vise également un réseau IP comprenant au moins une passerelle d'accès et un noeud concentrateur tels que décrits succinctement ci-dessus.

Les avantages offerts par ces dispositifs et ce réseau IP sont essentiellement les mêmes que ceux offerts par les procédés corrélatifs succinctement exposés ci-dessus.

On notera qu'il est possible de réaliser ces dispositifs dans le contexte d'instructions logicielles et/ou dans le contexte de circuits électroniques.

L'invention vise également un programme d'ordinateur téléchargeable depuis un réseau de communication et/ou stocké sur un support lisible par ordinateur et/ou exécutable par un microprocesseur. Ce programme d'ordinateur est remarquable en ce qu'il comprend des instructions pour l'exécution des étapes du procédé d'ajustement de bande passante succinctement exposé ci-dessus, lorsqu'il est exécuté sur un ordinateur.

Les avantages offerts par ce programme d'ordinateur sont essentiellement les mêmes que ceux offerts par ledit procédé.

D'autres aspects et avantages de l'invention apparaîtront à la lecture de la description détaillée ci-dessous de modes de réalisation particuliers, donnés à titre d'exemples non limitatifs. La description se réfère aux figures qui l'accompagnent, dans lesquelles :
- la figure 1 a, déjà décrite ci-dessus, représente schématiquement un réseau ADSL classique,
- la figure 1 b, déjà décrite ci-dessus, représente schématiquement un réseau ADSL classique comprenant un BAS,
- la figure 2a représente schématiquement un réseau xDSL selon un mode de réalisation de l'invention,
- la figure 2b représente schématiquement un réseau xDSL comprenant un BAS, selon un autre mode de réalisation de l'invention, et
- la figure 3 représente schématiquement l'architecture matérielle d'une passerelle, ainsi que certaines unités connectées à cette passerelle, selon un mode de réalisation de l'invention.

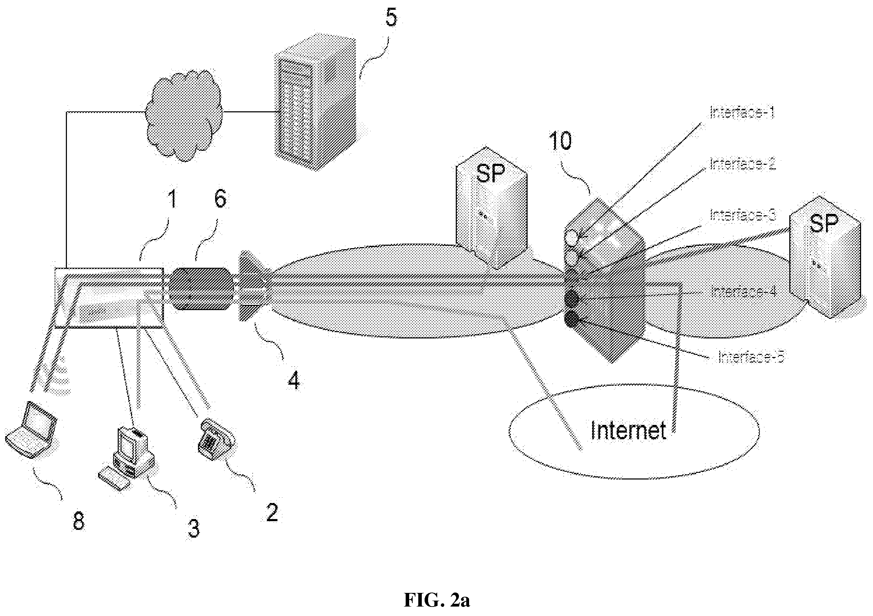

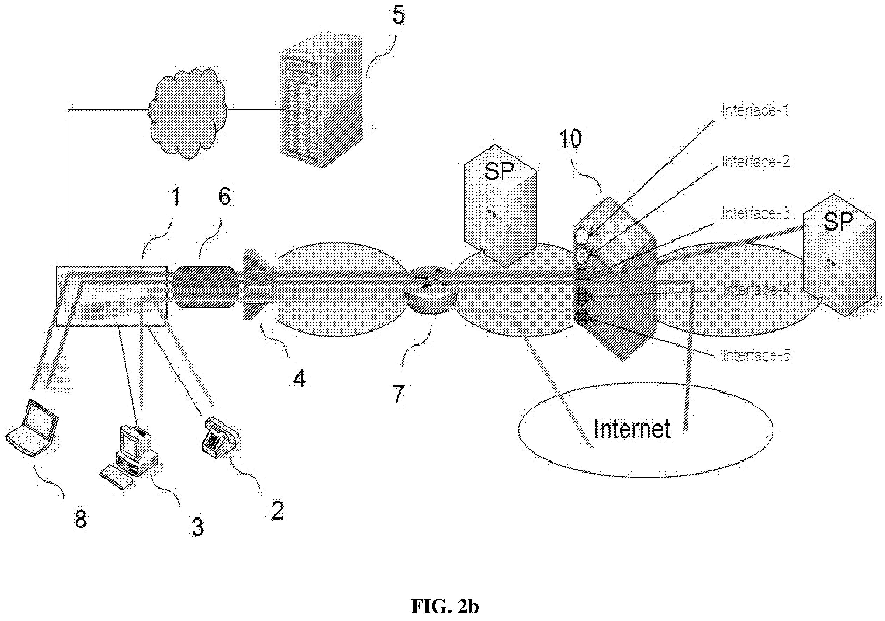

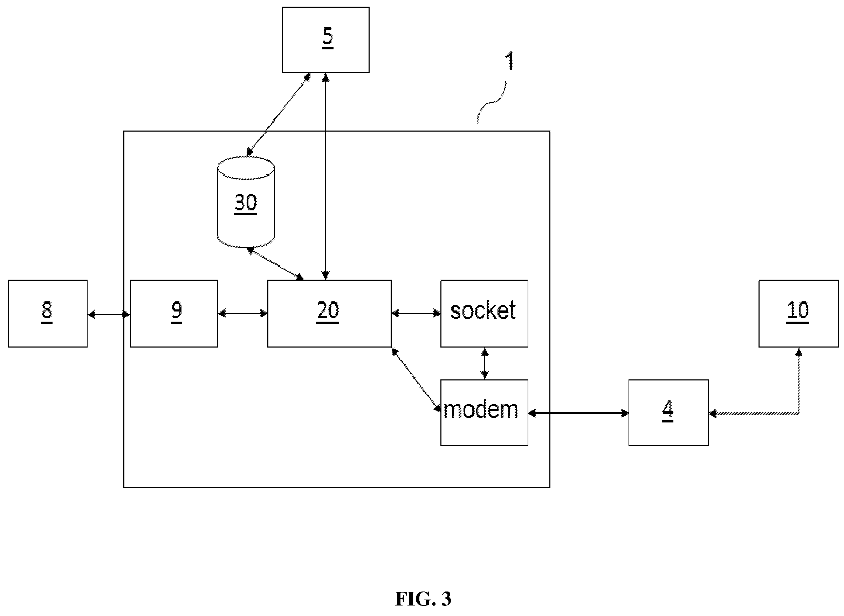

On va décrire à présent, en référence aux figures 2a, 2b et 3, les étapes d'un procédé d'ajustement de bande passante, selon divers modes de réalisation de l'invention.

La **figure 2a** représente schématiquement un réseau xDSL selon un mode de réalisation de l'invention (réseau sans BAS), et la **figure 2b** représente schématiquement un réseau xDSL selon un autre mode de réalisation de l'invention (réseau avec BAS). On retrouve sur les figures 2a et 2b les éléments décrits ci-dessus en référence aux figures 1a et 1 b, respectivement. La **figure 3** représente schématiquement l'architecture matérielle d'une passerelle, ainsi que certaines unités connectées à cette passerelle, selon un mode de réalisation de l'invention. Les figures 2a, 2b et 3 montrent notamment un équipement, dit « noeud concentrateur » 10, dont les fonctions seront explicitées ci-dessous.

On se place à présent, à titre d'exemple de réalisation, dans le cadre du Wi-Fi communautaire, décrit brièvement ci-dessus.

On suppose donc que la passerelle résidentielle 1, le téléphone 2 et l'ordinateur personnel 3 appartiennent à un abonné dit « abonné prioritaire », et qu'un autre abonné du même opérateur xDSL ou d'un opérateur partenaire, dit « abonné non-prioritaire », présente une requête visant à accéder à des plateformes de services distantes en communiquant *via* ladite passerelle 1. Cette requête d'accès peut par exemple être envoyée par l'abonné non-prioritaire à partir d'un ordinateur portable 8 muni d'un émetteur/récepteur Wi-Fi. Elle peut par exemple être une requête HTTP (« HyperText Transfert Protocol ») vers un serveur Web, ou une requête DNS (« Domain Name System ») de résolution de nom de machine en adresse IP, ou encore une requête d'allocation d'adresse IPv4 ou IPv6 selon le protocole DHCP (« Dynamic Host Configuration Protocol ») ou le protocole « Neighbor Discovery ».

A l'étape E1, la requête d'accès est reçue par un *hotspot* Wi-Fi 9 (non représentée sur les figures 2a et 2b) contenu dans la passerelle 1, et transmise à une unité de gestion 20 (non représentée sur les figures 2a et 2b) de la passerelle 1.

On suppose, dans le présent exemple de réalisation, qu'un débit de synchronisation a été préalablement négocié entre la passerelle 1 et le DSLAM 4 conformément au protocole de synchronisation classique mentionné ci-dessus, et que l'on va décrire à présent.

Ce protocole de synchronisation classique comprend notamment les étapes suivantes :
i) *établissement de la liaison :* la passerelle indique au DSLAM quelle version de la technologie xDSL et quels protocoles doivent être utilisés ; en fonction de ces informations, le nombre de sous-canaux est déterminé conformément à la norme DMT (mentionnée ci-dessus) ; le DSLAM détermine ensuite quels sous-canaux seront effectivement utilisés (certains sous-canaux peuvent être écartés pour des raisons de service) ;
ii) *test du modem :* évaluation préliminaire de l'atténuation de boucle, test du flux de données, lecture des niveaux de puissance amont, ajustement (en fait, réduction) du niveau de puissance si nécessaire (en effet, on peut avoir à brider la puissance maximale de certains sous-canaux afin de réduire les risques de diaphonie) ;
iii) *analyse des sous-canaux :* en réponse aux tests, on analyse l'état de chaque sous-canal ; on lit le niveau de puissance, et l'on calcule le Rapport Signal sur Bruit (« *Signal to Noise Ratio* », ou SNR, en anglais) et l'atténuation ; ces valeurs déterminent le débit de données pouvant être véhiculé dans chaque sous-canal ; et
iv) *établissement du débit de synchronisation :* celui-ci est déterminé par le débit total véhiculé par tous les sous-canaux ; le DSLAM vérifie que le modem peut effectivement recevoir des données à ce débit ; si le modem le confirme, la synchronisation est achevée ; sinon, la procédure d'initialisation est reprise, jusqu'à ce que la synchronisation soit achevée.

A l'étape E2, ladite unité de gestion 20 obtient la valeur du débit de synchronisation.

A l'étape E3, l'unité de gestion 20 émet une requête de consultation à l'intention d'une base de données 30 (non représentée sur les figures 2a et 2b) alimentée par ledit serveur de configuration 5 et qui est, de préférence, contenue dans la passerelle 1. Cette requête de consultation contient la valeur du débit de synchronisation ainsi que, optionnellement, d'autres informations telles que, notamment, les débits concernant d'autres services utilisant cette même ligne xDSL, véhiculés sur d'autres VCs de la ligne que le VC utilisé par le service « non-prioritaire » et requérant une bande passante garantie. En réponse à cette requête de consultation, l'unité de gestion 20 reçoit de la part de la base de données 30 l'identité d'une certaine interface correspondante du noeud concentrateur 10.

En effet, selon l'invention, on munit le noeud concentrateur 10 d'une pluralité d'interfaces, chacune de ces interfaces portant une fonction de limitation de bande passante prédéterminée permettant de limiter le débit sortant du noeud concentrateur 10 en direction de la passerelle 1. Par exemple, on pourra prévoir 10 interfaces, et conditionner le trafic sortant de chacune des interfaces du noeud concentrateur 10 à une valeur de débit spécifique, qui sera comprise entre 0,5 Mbps et 5 Mbps (par exemple 0,5 Mbps, 1 Mbps, 1,5 Mbps, 2 Mbps, ..., 5Mbps).

La base de données 30 contient une table de correspondance qui a été renseignée par le serveur de configuration 5. Cette table fait correspondre des informations respectives comprenant au moins une valeur de débit de synchronisation à l'identité d'une interface respective du noeud concentrateur 10. Les données de cette table résultent d'un algorithme de calcul permettant de déterminer la valeur V à laquelle le trafic du flux non-prioritaire doit être écrêté, et par suite l'interface adéquate sur le noeud concentrateur 10. Par exemple, ladite valeur *V* pourra être prise égale à *x*% du débit de synchronisation (où le nombre *x*, avec 0 ≤ *x* ≤ 100, est fixé par l'opérateur), ce qui aura pour effet de garantir que le service non-prioritaire ne pourra accéder qu'à une proportion bornée de la bande passante totale de la ligne xDSL ; on pourra optionnellement prendre également en compte la bande passante requise pour les services à débit garanti utilisant cette même ligne xDSL mais véhiculés sur les autres VCs de la ligne, ce qui signifie que la valeur V sera réduite en conséquence.

A l'étape E4, la passerelle 1 transmet la requête d'accès vers l'amont du réseau xDSL/IP, en utilisant comme adresse de destination l'adresse de ladite interface correspondante du noeud concentrateur 10 fournie par la base de données 30. On notera à cet égard que, de manière classique, la passerelle 1 comporte un « *socket* » chargé de l'adressage IP.

A l'étape E5, un contexte de routage est créé au niveau du noeud concentrateur 10 lors du passage, dans le sens montant, de la requête d'accès, afin que (en cas d'acceptation de la requête d'accès par le réseau IP) le trafic descendant associé à l'abonné non-prioritaire passe par ladite interface correspondante du noeud concentrateur 10.

Ainsi, les flux émis par l'ordinateur portable 8 passent par la passerelle 1, le VC 6, le DSLAM 4, et l'interface sélectionnée du noeud concentrateur 10, avant d'être aiguillés vers leur destination (Internet ou plateforme de services), tandis que les flux reçus par l'ordinateur portable 8 suivent le chemin inverse. Dans le mode de réalisation illustré sur la figure 2b, les flux échangés passent en outre par un BAS 7. On notera que seuls les flux de l'utilisateur (ou des utilisateurs) non-prioritaire(s) passent par le noeud concentrateur 10, cependant que tous les flux (prioritaires, ou non-prioritaires) passent par le même VC 6. Si d'autres abonnés non-prioritaires sont autorisés à accéder au même VC, leurs flux suivront le même chemin que pour le premier abonné non-prioritaire.

On s'assure ainsi que les flux descendants associés à l'utilisateur, ou aux utilisateurs, non-prioritaire(s) n'utiliseront au maximum qu'une partie prédéterminée du débit de synchronisation de la ligne xDSL. On pourra prévoir par exemple que l'abonné prioritaire bénéficie d'un débit minimal garanti pour ses services ; en variante, on pourra prévoir que la réduction relative (en pourcentage) de bande passante induite par le(s) service(s) non-prioritaire(s) sur le(s) service(s) prioritaire(s) soit limitée à une valeur maîtrisée par l'opérateur.

Comme indiqué ci-dessus, l'invention propose que, lors du passage, dans le sens montant, d'une requête d'accès à un service accessible *via* un réseau xDSL, on crée un contexte de routage au niveau du noeud concentrateur 10 lorsque l'on souhaite que le trafic descendant associé à cette requête d'accès passe par une interface adéquate de ce noeud concentrateur 10. Pour ce faire, diverses variantes de réalisation sont possibles, dans lesquelles le contexte de routage pourra contenir l'adresse externe de la passerelle 1 et/ou l'adresse source de la requête d'accès.

Ainsi, selon une première variante, on insère la requête d'accès dans un tunnel à destination de l'interface adéquate sur le noeud concentrateur 10. Dans ce cas, l'adresse source du tunnel est l'adresse externe de la passerelle 1, et l'adresse de destination du tunnel est l'adresse de l'interface adéquate sur le noeud concentrateur 10. Le noeud concentrateur 10 extrait la requête d'accès du tunnel, et la relaie vers la plateforme de services sans en modifier l'adresse IP source. Afin de s'assurer que, dans le sens descendant, le trafic passe bien par le noeud concentrateur 10, il suffit d'annoncer à la partie du réseau IP reliant le noeud concentrateur 10 à la plateforme de services la route vers la plage d'adresses des clients gérés par le noeud concentrateur 10. Cette solution est compatible avec l'utilisation d'un dispositif NAT (initiales des mots anglais « *Network Address Translator* » signifiant « Traducteur d'Adresse Réseau ») situé entre le noeud concentrateur 10 et la plateforme de services, ce dispositif NAT permettant, de manière classique, d'allouer des adresses privées aux clients IP destinés à recevoir les flux passant par le noeud concentrateur 10.

Selon une deuxième et une troisième variante, on utilise, pour chaque interface du noeud concentrateur 10, un *« proxy* » (serveur mandataire) associé à cette interface. Chacun de ces *proxys* associés relaie les requêtes d'accès aux plateformes de service en mettant à la place de l'adresse source de ces requêtes sa propre adresse, qui est annoncée au réseau IP le reliant aux plateformes de services de sorte que le trafic descendant passera par le même *proxy* que la requête d'accès. Ces *proxys* associés peuvent, selon un premier agencement, être intégrés dans le noeud concentrateur 10, de sorte que chaque interface du noeud concentrateur est une interface de *proxy.* Selon un deuxième agencement, les *proxys* associés peuvent être raccordés au noeud concentrateur 10 *via* un ou plusieurs réseaux privés construits de telle sorte que chaque *proxy* ne soit atteignable à partir de la passerelle 1 que par une unique interface du noeud concentrateur 10 ; à cet effet, l'adresse de chaque *proxy* doit être annoncée sur le réseau IP entre la passerelle 1 et le noeud de concentration 10 comme étant accessible *via* une interface particulière du noeud de concentration 10 ; dans le sens descendant, le trafic pourra être aiguillé dans ce réseau privé depuis un *proxy* donné jusqu'à l'interface du noeud concentrateur 10 à laquelle ce *proxy* est associé, soit par l'intermédiaire d'une route par défaut, soit par l'annonce d'une route vers la plage d'adresse des passerelles ou des clients IP gérés par cette interface du noeud concentrateur 10 (et, optionnellement, d'autres noeuds concentrateurs, ce qui permettra avantageusement d'utiliser plusieurs noeuds concentrateurs) ; on peut ainsi avantageusement allouer des adresses privées aux clients IP destinés à recevoir les flux provenant d'une plateforme de services et passant par un noeud concentrateur 10 en se passant de dispositif NAT entre ce noeud concentrateur 10 et la plateforme de services ; on notera que dans le cas de ce deuxième agencement, l'unité de gestion 20 reçoit de la part de la base de données 30 non pas l'identité de l'interface adéquate du noeud concentrateur 10, mais l'identité du *proxy* associé à cette interface.

Plus précisément, dans ladite deuxième variante, on utilise en outre un *proxy* dans la passerelle 1 (en plus des *proxys* associés que l'on vient de mentionner). La requête d'accès est alors interceptée par le *proxy* de la passerelle, qui relaie ensuite cette requête d'accès en y remplaçant l'adresse de destination par l'adresse du *proxy* associé à l'interface adéquate sur le noeud concentrateur 10. Optionnellement, l'adresse source de la requête d'accès peut être en outre remplacée par l'adresse externe de la passerelle 1.

Dans ladite troisième variante, enfin, on place un dispositif NAT dans la passerelle 1. La requête d'accès transite par le NAT, qui remplace, d'une part, l'adresse de destination en l'adresse du *proxy* associé à l'interface adéquate sur le noeud concentrateur 10. Optionnellement, l'adresse source de la requête d'accès peut être en outre remplacée par l'adresse externe de la passerelle 1 ; dans ce dernier cas, le port UDP/TCP source de la requête d'accès peut lui aussi être changé.

Dans cette deuxième et cette troisième variante, lorsque l'adresse source de la requête d'accès n'est pas modifiée par la passerelle 1, il est nécessaire d'annoncer les adresses des clients IP concernés au réseau IP entre la passerelle 1 et le noeud concentrateur 10 comme étant accessible *via* la passerelle 1, de sorte que le trafic descendant du noeud concentrateur 10 arrive bien à la passerelle 1. En revanche, lorsque l'adresse source de la requête d'accès est modifiée par la passerelle 1, seule l'adresse de la passerelle 1 doit être annoncée au réseau IP entre la passerelle 1 et le noeud concentrateur 10 ; on notera que cette dernière solution a pour avantage de ne pas lier l'adressage des clients avec la passerelle relayant leur requête d'accès et de ne pas exposer l'adressage de ces clients à de potentiels problèmes de sécurité.

L'invention peut être mise en oeuvre au sein des noeuds d'un réseau IP, par exemple des passerelles ou des noeuds concentrateurs, au moyen de composants logiciels et/ou matériels.

Les composants logiciels pourront être intégrés à un programme d'ordinateur classique de gestion de noeud de réseau. C'est pourquoi, comme indiqué ci-dessus, la présente invention concerne également un système informatique. Ce système informatique comporte de manière classique une unité centrale de traitement commandant par des signaux une mémoire, ainsi qu'une unité d'entrée et une unité de sortie. De plus, ce système informatique peut être utilisé pour exécuter un programme d'ordinateur comportant des instructions pour la mise en oeuvre de l'un quelconque des procédés d'ajustement de bande passante selon l'invention.

En effet, l'invention vise aussi un programme d'ordinateur téléchargeable depuis un réseau de communication comprenant des instructions pour l'exécution des étapes d'un procédé d'ajustement de bande passante selon l'invention, lorsqu'il est exécuté sur un ordinateur. Ce programme d'ordinateur peut être stocké sur un support lisible par ordinateur et peut être exécutable par un microprocesseur.

Ce programme peut utiliser n'importe quel langage de programmation, et se présenter sous la forme de code source, code objet, ou de code intermédiaire entre code source et code objet, tel que dans une forme partiellement compilée, ou dans n'importe quelle autre forme souhaitable.

L'invention vise aussi un support d'informations, inamovible, ou partiellement ou totalement amovible, lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comprendre un moyen de stockage, tel qu'une ROM, par exemple un CD ROM ou une ROM de circuit microélectronique, ou un moyen d'enregistrement magnétique, tel qu'un disque dur, ou encore une clé USB (« *USB flash drive » en* anglais).

D'autre part, le support d'informations peut être un support transmissible tel qu'un signal électrique ou optique, qui peut être acheminé via un câble électrique ou optique, par radio ou par d'autres moyens. Le programme d'ordinateur selon l'invention peut être en particulier téléchargé sur un réseau de type Internet.

En variante, le support d'informations peut être un circuit intégré dans lequel le programme est incorporé, le circuit étant adapté pour exécuter ou pour être utilisé dans l'exécution de l'un quelconque des procédés d'ajustement de bande passante selon l'invention.

## Revendications

1. Procédé d'ajustement de bande passante d'un flux de données au sein d'un canal virtuel xDSL, comprenant une étape de réception (E1), par une passerelle (1) d'accès à un réseau xDSL contenu dans un réseau IP, d'une requête d'accès à un service accessible *via* ledit réseau xDSL, **caractérisé en ce qu'**il comprend ensuite les étapes suivantes :
- ladite passerelle d'accès (1) obtient (E2) la valeur d'un débit de synchronisation entre la passerelle d'accès (1) et le réseau xDSL,
- la passerelle d'accès (1) détermine, en fonction d'un ensemble d'informations prédéterminé comprenant au moins ladite valeur du débit de synchronisation, l'identité d'une interface correspondante parmi une pluralité d'interfaces d'un équipement du réseau IP, dit noeud concentrateur (10), chacune de ces interfaces portant une fonction de limitation permettant de limiter le débit du trafic, dit trafic descendant, sortant de cette interface en direction de la passerelle (1), ou l'identité d'un serveur mandataire associé à ladite interface correspondante du noeud concentrateur (10),
- la passerelle d'accès (1) transmet (E4) la requête d'accès vers l'amont du réseau IP, en utilisant comme adresse de destination l'adresse de ladite interface correspondante du noeud concentrateur (10) ou l'adresse dudit serveur mandataire associé à cette interface correspondante du noeud concentrateur (10), et
- un contexte de routage est créé (E5) au niveau du noeud concentrateur (10) lors du passage, dans le sens montant, de la requête d'accès, de sorte que le trafic descendant associé à cette requête d'accès passe par ladite interface correspondante du noeud concentrateur (10).

2. Procédé d'ajustement de bande passante selon la revendication 1, **caractérisé en ce que** ladite valeur du débit de synchronisation a été préalablement négociée entre la passerelle d'accès (1) et le réseau xDSL.

3. Procédé selon la revendication 1 ou la revendication 2, **caractérisé en ce que** ledit service visé par ladite requête d'accès est un service non-prioritaire par rapport à un service prédéterminé, dit service prioritaire, ledit service prioritaire étant associé à des flux de données passant par le même canal virtuel que ceux du service non-prioritaire, mais ne passant pas par ledit noeud concentrateur (10).

4. Procédé selon l'une quelconque des revendications 1 à 3, **caractérisé en ce que** ledit contexte de routage est créé en insérant, au niveau de ladite passerelle d'accès (1), ladite requête d'accès dans un tunnel à destination de ladite interface correspondante du noeud concentrateur (10).

5. Procédé selon l'une quelconque des revendications 1 à 3, **caractérisé en ce que** ledit contexte de routage est créé en utilisant un serveur mandataire dans ladite passerelle (1), ladite requête d'accès étant interceptée par ce serveur mandataire, qui relaie ensuite cette requête d'accès en y remplaçant l'adresse de destination par l'adresse d'un serveur mandataire associé à ladite interface correspondante du noeud concentrateur (10).

6. Procédé selon l'une quelconque des revendications 1 à 3, **caractérisé en ce que** ledit contexte de routage est créé en utilisant, au niveau de ladite passerelle d'accès (1), un dispositif NAT, *Network Address Translator*, par lequel transite ladite requête d'accès, ledit NAT changeant l'adresse de destination de cette requête d'accès en l'adresse d'un serveur mandataire associé à ladite interface correspondante du noeud concentrateur (10).

7. Passerelle (1) d'accès à un réseau xDSL contenu dans un réseau IP, comprenant des moyens pour recevoir une requête d'accès à un service accessible *via* ledit réseau xDSL, **caractérisée en ce qu'**elle comprend en outre des moyens pour :
- obtenir la valeur d'un débit de synchronisation entre ladite passerelle d'accès (1) et ledit réseau xDSL,
- déterminer, en fonction d'un ensemble d'informations prédéterminé comprenant au moins ladite valeur du débit de synchronisation, l'identité d'une interface correspondante située dans ledit réseau IP ou l'identité d'un serveur mandataire associé à ladite interface correspondante, et
- transmettre ladite requête d'accès vers l'amont du réseau IP, en utilisant comme adresse de destination l'adresse de ladite interface correspondante ou l'adresse dudit serveur mandataire associé à cette interface correspondante.

8. Passerelle d'accès (1) selon la revendication 7, **caractérisée en ce qu'**elle comprend des moyens pour négocier avec le réseau xDSL ladite valeur du débit de synchronisation.

9. Passerelle d'accès (1) selon la revendication 7 ou la revendication 8, **caractérisée en ce qu'**elle comprend en outre des moyens pour déterminer si ledit service visé par ladite requête d'accès est un service prédéterminé, dit service prioritaire, ou un autre service, dit service non-prioritaire, et pour ne mettre en oeuvre les moyens de la revendication 7 que s'il s'agit d'un service non-prioritaire.

10. Equipement, dit noeud concentrateur (10), d'un réseau IP, comprenant une pluralité d'interfaces, **caractérisé en ce qu'**il comprend en outre des moyens pour, lors de la réception par une interface donnée dudit noeud concentrateur (10) d'une requête d'accès à un service émise par un utilisateur d'un réseau xDSL contenu dans ledit réseau IP, router le trafic, dit trafic descendant, destiné à cet utilisateur à travers ladite interface ayant reçu la requête d'accès, et **en ce que** chacune de ces interfaces porte une fonction de limitation permettant de limiter le débit dudit trafic descendant.

11. Réseau IP, **caractérisé en ce qu'**il comprend au moins une passerelle d'accès (1) selon l'une quelconque des revendications 7 à 9, et un noeud concentrateur (10) selon la revendication 10.

12. Moyen de stockage de données inamovible, ou partiellement ou totalement amovible, comportant des instructions de code de programme informatique pour l'exécution des étapes d'un procédé d'ajustement de bande passante selon l'une quelconque des revendications 1 à 6.

13. Programme d'ordinateur téléchargeable depuis un réseau de communication et/ou stocké sur un support lisible par ordinateur et/ou exécutable par un microprocesseur, **caractérisé en ce qu'**il comprend des instructions pour l'exécution des étapes d'un procédé d'ajustement de bande passante selon l'une quelconque des revendications 1 à 6, lorsqu'il est exécuté sur un ordinateur.

## Patentansprüche

1. Verfahren zum Einstellen der Bandbreite eines Datenstroms innerhalb eines virtuellen xDSL-Kanals, das einen Schritt des Empfangens (E1) durch ein Gateway (1) für den Zugang zu einem xDSL-Netzwerk, das in einem IP-Netzwerk enthalten ist, einer Zugangsanfrage bei einem Service, der über das xDSL-Netzwerk zugänglich ist, umfasst, **dadurch gekennzeichnet, dass** es anschließend die folgenden Schritte umfasst:
- das Zugangs-Gateway (1) erhält (E2) den Wert eines Synchronisationsdurchsatzes zwischen dem Zugangs-Gateway (1) und dem xDSL-Netzwerk,
- das Zugangs-Gateway (1) bestimmt in Abhängigkeit von einer Einheit vorbestimmter Informationen, die mindestens den Wert des Synchronisationsdurchsatzes umfasst, die Identität einer entsprechenden Schnittstelle aus einer Vielzahl von Schnittstellen einer Ausstattung des IP-Netzwerks, Konzentratorknoten (10) genannt, wobei jede dieser Schnittstellen eine Begrenzungsfunktion trägt, die es erlaubt, den Durchsatz des Verkehrs, Abwärtsverkehr genannt, der aus dieser Schnittstelle in Richtung des Gateways (1) austritt, zu begrenzen, oder die Identität eines Proxy-Servers, der mit der entsprechenden Schnittstelle des Konzentratorknotens (10) assoziiert ist,
- das Zugangs-Gateway (1) überträgt (E4) die Zugangsanfrage nach stromaufwärts des IP-Netzwerks, indem es als Zieladresse die Adresse der entsprechenden Schnittstelle des Konzentratorknotens (10) oder die Adresse des Proxy-Servers, der mit dieser entsprechenden Schnittstelle des Konzentratorknotens (10) assoziiert ist, verwendet, und
- ein Routing-Kontext wird in Bezug auf den Konzentratorknoten (10) bei der Passage in die aufsteigende Richtung der Zugangsanfrage geschaffen (E5), so dass der Abwärtsverkehr, der mit dieser Zugangsanfrage assoziiert ist, durch die entsprechende Schnittstelle des Konzentratorknotens (10) läuft.

2. Verfahren zum Einstellen der Bandbreite nach Anspruch 1, **dadurch gekennzeichnet, dass** der Wert des Synchronisationsdurchsatzes vorab zwischen dem Zugangs-Gateway (1) und dem xDSL-Netzwerk ausgehandelt wurde.

3. Verfahren nach Anspruch 1 oder Anspruch 2, **dadurch gekennzeichnet, dass** der Service, auf den die Zugangsanfrage abzielt, ein in Bezug auf einen vorbestimmten Service, vorrangiger Service genannt, nicht vorrangiger Service ist, wobei der vorrangige Service mit Datenströmen assoziiert ist, die durch denselben virtuellen Kanal wie diejenigen des nicht vorrangigen Service laufen, aber nicht durch den Konzentratorknoten (10) laufen.

4. Verfahren nach einem der Ansprüche 1 bis 3, **dadurch gekennzeichnet, dass** der Routing-Kontext geschaffen wird, indem in Bezug auf den Zugangs-Gateway (1) die Zugangsanfrage in einen Tunnel in Richtung der entsprechenden Schnittstelle des Konzentratorknotens (10) eingefügt wird.

5. Verfahren nach einem der Ansprüche 1 bis 3, **dadurch gekennzeichnet, dass** der Routing-Kontext geschaffen wird, indem ein Proxy-Server in dem Gateway (1) verwendet wird, wobei die Zugangsanfrage von diesem Proxy-Server abgefangen wird, der anschließend diese Zugangsanfrage weiterleitet, indem er in ihr die Zieladresse durch die Adresse eines Proxy-Servers, der mit der entsprechenden Schnittstelle des Konzentratorknotens (10) assoziiert ist, ersetzt.

6. Verfahren nach einem der Ansprüche 1 bis 3, **dadurch gekennzeichnet, dass** der Routing-Kontext geschaffen wird, indem in Bezug auf den Zugangs-Gateway (1) eine NAT (Network Address Translator, Netzwerkadressenübersetzer)-Vorrichtung, durch die die Zugangsanfrage durchgeht, geschaffen wird, wobei der NAT die Zieladresse dieser Zugangsanfrage in die Adresse eines Proxy-Servers, der mit der entsprechenden Schnittstelle des Konzentratorknotens (10) assoziiert ist, ändert.

7. Zugangs-Gateway (1) zu einem xDSL-Netzwerk, das in einem IP-Netzwerk enthalten ist, das Mittel zum Empfangen einer Zugangsanfrage zu einem Service umfasst, der über das xDSL-Netzwerk zugänglich ist, **dadurch gekennzeichnet, dass** es außerdem Mittel umfasst, um:
- den Wert eines Synchronisationsdurchsatzes zwischen dem Zugangs-Gateway (1) und dem xDSL-Netzwerk zu erhalten,
- in Abhängigkeit von einer Einheit vorbestimmter Informationen, die mindestens den Wert des Synchronisationsdurchsatzes umfassen, die Identität einer entsprechenden Schnittstelle, die sich in dem IP-Netzwerk befindet, oder die Identität eines Proxy-Servers, der mit der entsprechenden Schnittstelle assoziiert ist, zu bestimmen und
- die Zugangsanfrage nach stromaufwärts des IP-Netzwerks zu übertragen, indem als Zieladresse die Adresse der entsprechenden Schnittstelle oder die Adresse des Proxy-Servers, der mit dieser entsprechenden Schnittstelle assoziiert ist, verwendet wird.

8. Zugangs-Gateway (1) nach Anspruch 7, **dadurch gekennzeichnet, dass** es Mittel zum Aushandeln des Werts des Synchronisationsdurchsatzes mit dem xDSL-Netzwerk umfasst.

9. Zugangs-Gateway (1) nach Anspruch 7 oder Anspruch 8, **dadurch gekennzeichnet, dass** es außerdem Mittel umfasst, um zu bestimmen, ob der Service, auf den die Zugangsanfrage abzielt, ein vorbestimmter Service, vorrangiger Service genannt, ist, oder ein anderer Service, nicht vorrangiger Service genannt, und um die Mittel des Anspruchs 7 nur umzusetzen, wenn es sich um einen nicht vorrangigen Service handelt.

10. Ausstattung, Konzentratorknoten (10) genannt, eines IP-Netzwerks, die eine Vielzahl von Schnittstellen umfasst, **dadurch gekennzeichnet, dass** sie außerdem Mittel umfasst, um bei dem Empfang durch eine gegebene Schnittstelle des Konzentratorknotens (10) einer Zugangsanfrage zu einem Service, die von einem Benutzer eines xDSL-Netzwerks, das in dem IP-Netzwerk enthalten ist, ausgegeben wird, den Verkehr, Abwärtsverkehr genannt, der für diesen Benutzer bestimmt ist, durch die Schnittstelle, die die Zugangsanfrage empfangen hat, zu routen, und dass jede dieser Schnittstellen eine Begrenzungsfunktion trägt, die es erlaubt, den Durchsatz des Abwärtsverkehrs zu begrenzen.

11. IP-Netzwerk, **dadurch gekennzeichnet, dass** es mindestens ein Zugangs-Gateway (1) nach einem der Ansprüche 7 bis 9 und einen Konzentratorknoten (10) nach Anspruch 10 umfasst.

12. Nicht abnehmbares oder teilweise oder vollständig abnehmbares Mittel zum Speichern von Daten, das Informatik-Programmcodeanweisungen für die Ausführung der Schritte eines Verfahrens zum Einstellen einer Bandbreite nach einem der Ansprüche 1 bis 6 umfasst.

13. Computerprogramm, das von einem Kommunikationsnetzwerk heruntergeladen und/oder auf einem durch einen Computer lesbaren und/oder von einem Microprozessor ausführbaren Träger gespeichert ist, **dadurch gekennzeichnet, dass** es Anweisungen zum Ausführen der Schritte eines Verfahrens zum Einstellen der Bandbreite nach einem der Ansprüche 1 bis 6 umfasst, wenn es auf einem Computer ausgeführt wird.

## Claims

1. Method for adjusting the bandwidth of a data stream within an xDSL virtual channel, comprising a step (E1) of receiving, by a gateway (1) for accessing an xDSL network contained in an IP network, a request to access a service that is accessible *via* said xDSL network, **characterized in that** it thereafter comprises the following steps:
- said access gateway (1) obtains (E2) the value of a bit rate of synchronization between the access gateway (1) and the xDSL network;
- the access gateway (1) determines, according to a predetermined set of information comprising at least said value of the synchronization bit rate, the identity of a corresponding interface out of a plurality of interfaces of a device of the IP network, referred to as a concentrator node (10), each of these interfaces bearing a limitation function making it possible to limit the bit rate of the traffic, referred to as downlink traffic, that exits this interface in the direction of the gateway (1), or the identity of a proxy server that is associated with said corresponding interface of the concentrator node (10);
- the access gateway (1) transmits (E4) the access request towards the upstream part of the IP network by using, as the destination address, the address of said corresponding interface of the concentrator node (10) or the address of said proxy server that is associated with this corresponding interface of the concentrator node (10); and
- a routing context is created (E5) at the level of the concentrator node (10) during the passage, in the uplink direction, of the access request, so that the downlink traffic associated with this access request passes through said corresponding interface of the concentrator node (10).

2. Method for adjusting the bandwidth according to Claim 1, **characterized in that** said value of the synchronization bit rate has been negotiated beforehand between the access gateway (1) and the xDSL network.

3. Method according to Claim 1 or Claim 2, **characterized in that** said service that is the target of said access request is a non-priority service with respect to a predetermined service, referred to as a priority service, said priority service being associated with data streams passing through the same virtual channel as those of the non-priority service, but not passing through said concentrator node (10).

4. Method according to any one of Claims 1 to 3, **characterized in that** said routing context is created by inserting, at the level of said access gateway (1), said access request into a tunnel leading to said corresponding interface of the concentrator node (10).

5. Method according to any one of Claims 1 to 3, **characterized in that** said routing context is created by using a proxy server in said gateway (1), said access request being intercepted by this proxy server which subsequently relays this access request by replacing therein the destination address with the address of a proxy server that is associated with said corresponding interface of the concentrator node (10).

6. Method according to any one of Claims 1 to 3, **characterized in that** said routing context is created by using, at the level of said access gateway (1), a NAT (Network Address Translator) device through which said access request transits, said NAT changing the destination address of this access request to the address of a proxy server that is associated with said corresponding interface of the concentrator node (10).

7. Gateway (1) for accessing an xDSL network contained in an IP network, comprising means for receiving a request to access a service that is accessible *via* said xDSL network, **characterized in that** it additionally comprises means for:
- obtaining the value of a bit rate of synchronization between said access gateway (1) and said xDSL network;
- determining, according to a predetermined set of information comprising at least said value of the synchronization bit rate, the identity of a corresponding interface that is located in said IP network or the identity of a proxy server that is associated with said corresponding interface; and
- transmitting said access request towards the upstream part of the IP network by using, as the destination address, the address of said corresponding interface or the address of said proxy server that is associated with this corresponding interface.

8. Access gateway (1) according to Claim 7, **characterized in that** it comprises means for negotiating said value of the synchronization bit rate with the xDSL network.

9. Access gateway (1) according to Claim 7 or Claim 8, **characterized in that** it additionally comprises means for determining whether said service that is the target of said access request is a predetermined service, referred to as a priority service, or another service, referred to as a non-priority service, and for implementing the means of Claim 7 only if it is a non-priority service.

10. Device, referred to as a concentrator node (10), of an IP network, comprising a plurality of interfaces, **characterized in that** it additionally comprises means for, when a service access request issued by a user of an xDSL network that is contained in said IP network is received by a given interface of said concentrator node (10), routing the traffic, referred to as downlink traffic, that is intended for this user through said interface that has received the access request, and **in that** each of these interfaces bears a limitation function making it possible to limit the bit rate of said downlink traffic.

11. IP network, **characterized in that** it comprises at least one access gateway (1) according to any one of Claims 7 to 9, and a concentrator node (10) according to Claim 10.

12. Irremovable, or partially or completely removable data storage means, comprising computer program code instructions for the execution of the steps of a method for adjusting the bandwidth according to any one of Claims 1 to 6.

13. Computer program that can be downloaded from a communication network and/or stored on a support that can be read by computer and/or can be executed by a microprocessor, **characterized in that** it comprises instructions for the execution of the steps of a method for adjusting the bandwidth according to any one of Claims 1 to 6, when it is executed on a computer.
